# EUROPEAN PATENT APPLICATION

(11) **EP 4 216 510 A1**
(43) Date of publication of application: **26.07.2023**
(21) Application number: 21884876.0
(22) Date of filing: 29.09.2021
(51) Int. Cl.: H04L 61/00

(54) **METHOD FOR ACQUIRING ADDRESS, APPARATUS AND SYSTEM**

(30) Priority: 28.10.2020 CN 202011174992
(71) Applicant: Huawei Technologies Co., Ltd., Shenzhen, Guangdong 518129 (CN)
(72) Inventor: ZHANG, Kai, Shenzhen, Guangdong 518129 (CN); LI, Jinzhu, Shenzhen, Guangdong 518129 (CN); CHEN, Liang, Shenzhen, Guangdong 518129 (CN)
(74) Representative: Huawei European IPR
(86) International application number: PCT/CN2021/121973
(87) International publication number: WO 2022/089147

(57) **Abstract**

This application discloses an address obtaining method, apparatus, and system, and belongs to the communication field. The method includes: A first network device broadcasts a first address allocation request message by using a layer 2 network, where the first address allocation request message includes a device identifier of the first network device and indication information, the indication information indicates a network device receiving the first address allocation request message to request an upper-layer network to allocate an address to the first network device corresponding to the device identifier, and a network device capable of receiving the first address allocation request message includes a second network device; and the first network device receives a first address allocation response message sent by the second network device, where the first address allocation response message includes a first Internet Protocol IP address, and the first IP address is an IP address that is allocated to the first network device and that is received by the second network device from the upper-layer network. This application can improve efficiency of obtaining the IP address.

## Description

This application claims priority to Chinese Patent Application No. 202011174992.1, filed with the China National Intellectual Property Administration on October 28, 2020 and entitled "ADDRESS OBTAINING METHOD, APPARATUS, AND SYSTEM", which is incorporated herein by reference in its entirety.

### TECHNICAL FIELD

This application relates to the communication field, and in particular, to an address obtaining method, apparatus, and system.

### BACKGROUND

Software-defined networking (software-defined networking, SDN) is a new innovative network architecture and an implementation of network virtualization. A core technology of the software-defined networking is to separate a control plane from a data plane of a network device, and move the control plane of the network device up to a controller. In this way, the controller can manage and control each network device in the SDN.

A dynamic host configuration protocol (dynamic host configuration protocol, DHCP) server may be deployed in the SDN. In this way, for a new network device deployed in the SDN, an Internet Protocol (internet protocol, IP) address of the DHCP server needs to be set in advance in the network device, and then the network device establishes a separate channel to the DHCP server based on the IP address, and requests, by using the separate channel, the DHCP server to allocate an IP address to the network device. The network device establishes a connection to the controller based on the allocated IP address, and then the controller may manage and control the network device.

In a process of implementing this application, the conventional technology has at least the following problems:
In the foregoing solution, the address of the DHCP server needs to be set in advance in the network device. As a result, a process of obtaining the IP address becomes complex, and efficiency of obtaining the IP address is reduced.

### SUMMARY

This application provides an address obtaining method, apparatus, and system, to improve efficiency of obtaining an IP address. Technical solutions are as follows:
According to a first aspect, this application provides an address obtaining method. In the method, a first network device broadcasts a first address allocation request message by using a layer 2 network, where the first address allocation request message includes a device identifier of the first network device and indication information. The indication information indicates a network device receiving the first address allocation request message to request an upper-layer network to allocate an address to the first network device corresponding to the device identifier, and a network device capable of receiving the first address allocation request message includes a second network device. The first network device receives a first address allocation response message sent by the second network device, where the first address allocation response message includes a first Internet Protocol IP address, and the first IP address is an IP address that is allocated to the first network device and that is received by the second network device from the upper-layer network.

The first address allocation request message includes the device identifier of the first network device and the indication information, and the indication information indicates the network device receiving the first address allocation request message to request the upper-layer network to allocate the address to the first network device corresponding to the device identifier. Therefore, for the second network device receiving the first address allocation request message, the second network device may act as a proxy for the first network device to request the upper-layer network to allocate the IP address to the first network device. In this way, an IP address of a DHCP server does not need to be set in advance in the first network device, and the first network device does not need to establish a separate channel to the DHCP server. Therefore, efficiency of obtaining the IP address is improved. In addition, the first network device may not need to rely on a DHCP server, in a network architecture in which the first network device is located, to allocate the address, so that the DHCP server may be omitted in the network architecture. Therefore, costs are reduced. Alternatively, when there is no DHCP server in the network architecture in which the first network device is located, it is also ensured that the first network device can successfully obtain the IP address, and reliability of the network architecture is improved.

In a possible implementation, the second network device is a device to which a formal IP address is already allocated; and after receiving the first address allocation request message, the second network device requests the upper-layer network to allocate the address to the first network device corresponding to the device identifier. Because the formal IP address is already allocated to the second network device, the second network device may normally be connected to a network and access the network based on the formal IP address. In this way, it can be ensured that the second network device can successfully request the upper-layer network to allocate the address to the first network device.

In another possible implementation, the first network device receives an answer message sent by at least one second network device; the first network device selects a second network device based on the received answer message; and the first network device sends an acknowledgment message to the selected second network device, where the acknowledgment message is used for triggering the selected second network device to request the upper-layer network to allocate the address to the first network device corresponding to the device identifier. In this way, it is ensured that only the selected second network device requests the upper-layer network to allocate the address to the first network device. Therefore, a conflict problem that is caused when a plurality of second network devices simultaneously request the upper-layer network to allocate the address to the first network device is avoided.

In another possible implementation, the first address allocation request message includes an optional field, and the optional field includes the device identifier and the indication information.

According to a second aspect, this application provides an address obtaining method. In the method, a second network device receives a first address allocation request message sent by a first network device, where the first address allocation request message includes a device identifier of the first network device, and the first address allocation request message requests to allocate an Internet Protocol IP address to the first network device. The second network device sends a second address allocation request message to an upper-layer network, where a source address included in a packet header of the second address allocation request message is a second IP address, a payload of the second address allocation request message includes the first address allocation request message, and the second IP address is an address already allocated to the second network device. The second network device receives a second address allocation response message, where a destination address included in a packet header of the second address allocation response message is the second IP address, a payload of the second address allocation response message includes a first IP address and the device identifier, and the first IP address is an address allocated by the upper-layer network to the first network device. The second network device sends a first address allocation response message to the first network device based on the device identifier, where the first address allocation response message includes the first IP address.

The source address included in the packet header of the second address allocation request message is the second IP address, the payload of the second address allocation request message includes the first address allocation request message, and the second IP address is the address already allocated to the second network device. In this way, the second address allocation request message sent by the second network device can be successfully transmitted to the upper-layer network, so that the upper-layer network can receive the second address allocation request message and allocate the first IP address to the first network device. In addition, the destination address of the second address allocation response message is the second IP address. In this way, it is ensured that the second address allocation response message can be successfully transmitted from the upper-layer network to the second network device. To be specific, the second network device can successfully receive the first IP address, and then send the first IP address to the first network device. In this way, an IP address of a DHCP server does not need to be set in advance in the first network device, and the first network device does not need to establish a separate channel to the DHCP server. Therefore, efficiency of obtaining the IP address is improved. In addition, the first network device does not need to rely on a DHCP server, in a network architecture in which the first network device is located, to allocate the address, so that the DHCP server may be omitted in the network architecture. Therefore, costs are reduced. Alternatively, when there is no DHCP server in the network architecture in which the first network device is located, it is also ensured that the first network device can successfully obtain the IP address, and reliability of the network architecture is improved.

In a possible implementation, the first address allocation request message further includes indication information. The indication information indicates a network device receiving the first address allocation request message to request the upper-layer network to allocate the address to the first network device corresponding to the device identifier, and a network device capable of receiving the first address allocation request message includes the second network device. In this way, the second network device sends the second address allocation request message to the upper-layer network based on an indication of the indication information, so that the second network device may act as a proxy for the first network device to request the upper-layer network to allocate the IP address to the first network device. In this way, the first network device does not need to rely on the DHCP server, in the network architecture in which the first network device is located, to allocate the address, so that the DHCP server is omitted in the network architecture. Therefore, the costs are reduced and it is ensured that the first network device can successfully obtain the IP address.

In another possible implementation, the second network device sends an answer message to the first network device based on the indication of the indication information. The second network device receives an acknowledgment message sent by the first network device based on the answer message. The second network device, as triggered by the acknowledgment message, sends the second address allocation request message to the upper-layer network. The second network device sends the second address allocation request message only after receiving the acknowledgment message. Therefore, the second network device can request the upper-layer network to allocate the address to the first network device only after being acknowledged by the first network device. Therefore, a conflict problem that is caused when a plurality of second network devices simultaneously request the upper-layer network to allocate the address to the first network device is avoided.

In another possible implementation, the second network device binds the device identifier and a first port, where the first port is a port that is in the second network device and that is used for receiving the first address allocation request message. In this way, after obtaining the first IP address, the second network device may determine, based on the device identifier, the first port that can communicate with the first network device, so that the first IP address can be successfully sent to the first network device through the first port.

In another possible implementation, the second network device determines the first port bound to the device identifier, and sends the first address allocation response message to the first network device through the first port, so that the first IP address can be successfully sent to the first network device.

In another possible implementation, the first address allocation request message includes an optional field, and the optional field includes the device identifier.

According to a third aspect, this application provides an address obtaining apparatus. The apparatus is configured to perform the method performed by the first network device in any one of the first aspect or the possible implementations of the first aspect. Specifically, the apparatus includes units configured to perform the method performed by the first network device in any one of the first aspect or the possible implementations of the first aspect.

According to a fourth aspect, this application provides an address obtaining apparatus. The apparatus is configured to perform the method performed by the second network device in any one of the second aspect or the possible implementations of the second aspect. Specifically, the apparatus includes units configured to perform the method performed by the second network device in any one of the second aspect or the possible implementations of the second aspect.

According to a fifth aspect, this application provides an address obtaining apparatus. The apparatus includes a transceiver, a processor, and a memory. The transceiver, the processor, and the memory may be connected through an internal connection. The memory is configured to store a program, and the processor is configured to execute the program in the memory and cooperate with the transceiver, so that the apparatus completes the method performed by the first network device in any one of the first aspect or the possible implementations of the first aspect.

According to a sixth aspect, this application provides an address obtaining apparatus. The apparatus includes a transceiver, a processor, and a memory. The transceiver, the processor, and the memory may be connected through an internal connection. The memory is configured to store a program, and the processor is configured to execute the program in the memory and cooperate with the transceiver, so that the apparatus completes the method performed by the second network device in any one of the second aspect or the possible implementations of the second aspect.

According to a seventh aspect, this application provides a computer program product. The computer program product includes a computer program stored in a computer-readable storage medium, and the computer program is loaded by a processor to implement instructions of the method performed by the first network device in any one of the first aspect, the second aspect, the possible implementations of the first aspect, or the possible implementations of the second aspect.

According to an eighth aspect, this application provides a computer-readable storage medium. The computer-readable storage medium is configured to store a computer program, and the computer program is loaded by a processor to execute instructions of the method performed by the second network device in any one of the first aspect, the second aspect, the possible implementations of the first aspect, or the possible implementations of the second aspect.

According to a ninth aspect, this application provides an address obtaining system. The system includes the apparatus in the third aspect and the apparatus in the fourth aspect, or the system includes the apparatus in the fifth aspect and the apparatus in the sixth aspect.

### BRIEF DESCRIPTION OF DRAWINGS

FIG. 1 is a schematic diagram of a structure of a network architecture according to an embodiment of this application;
FIG. 2 is a schematic diagram of a structure of a data communication network according to an embodiment of this application;
FIG. 3 is a schematic diagram of a structure of a data center network according to an embodiment of this application;
FIG. 4 is a flowchart of an address obtaining method according to an embodiment of this application;
FIG. 5 is a schematic diagram of a structure of another network architecture according to an embodiment of this application;
FIG. 6 is a flowchart of a controller connection method according to an embodiment of this application;
FIG. 7 is a schematic diagram of a structure of an address obtaining apparatus according to an embodiment of this application;
FIG. 8 is a schematic diagram of a structure of another address obtaining apparatus according to an embodiment of this application;
FIG. 9 is a schematic diagram of a structure of another address obtaining apparatus according to an embodiment of this application;
FIG. 10 is a schematic diagram of a structure of another address obtaining apparatus according to an embodiment of this application; and
FIG. 11 is a schematic diagram of a structure of an address obtaining system according to an embodiment of this application.

### DESCRIPTION OF EMBODIMENTS

The following further describes in detail embodiments of this application with reference to accompanying drawings.

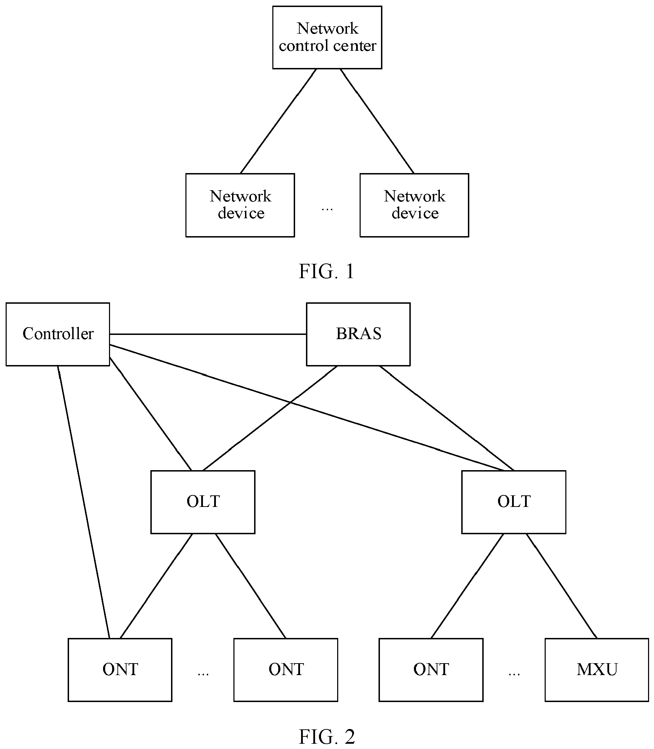

Refer to FIG. 1. An embodiment of this application provides a network architecture, including:
a network control center and at least one network device, where the at least one network device is located in a layer 2 network, the network control center is located in an upper-layer network, and the upper-layer network is an upper layer network of the layer 2 network. Each of the at least one network device may communicate with the network control center.

Each of the at least one network device is a device to which a formal IP address is already allocated, so that the network device may be connected to a network by using the formal IP address allocated to the network device and access the network by using the IP address. For example, the network device establishes a network connection to the network control center by using the formal IP address of the network device, and by using the network connection, sends data to the network control center or receives data sent by the network control center, to implement communication with the network control center.

Optionally, the network control center may be a controller or an address server. The network architecture may be SDN. When the network control center is a controller, the controller may control and/or manage each network device in the network architecture.

The network architecture may be a data communication network, a data center network, an access network, or the like.

For example, refer to FIG. 2. The network architecture is a data communication network, and network devices in the data communication network includes devices such as a broadband access server (broadband remote access server, BRAS), at least one optical line terminal (optical line terminal, OLT), at least one optical network terminal (optical network terminal, ONT), and/or at least one multiple x unit (multiple x unit, MXU). The data communication network may further include a controller, and the controller may establish network connections/a network connection to the BRAS, the OLT, the ONT, and/or the MXU. In this way, the controller may control and/or manage the BRAS, the OLT, the ONT, and/or the MXU in the data communication network.

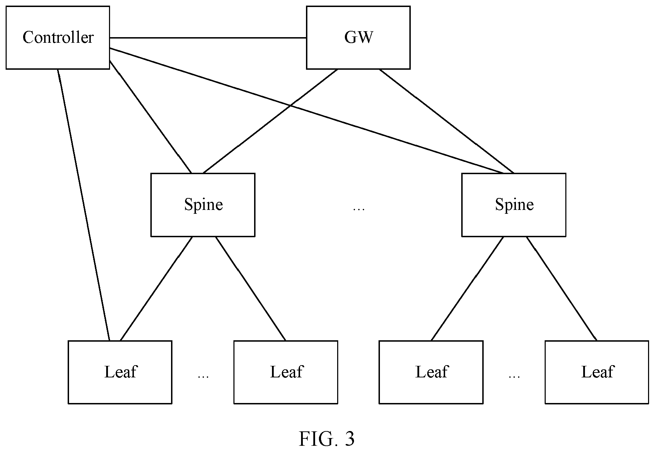

For another example, refer to FIG. 3. The network architecture is a data center network, and network devices in the data center network includes devices such as a gateway (gateway, GW), at least one leaf (Leaf), and/or at least one backbone switch (Spine). The data center network may further include a controller, and the controller may establish network connections/a network connection to the GW, the Leaf, and/or the Spine. In this way, the controller may control and/or manage the Leaf, the Spine, and/or the GW in the data center network.

In the network architecture shown in FIG. 1, the network control center includes at least one IP address pool, and each IP address pool includes at least one consecutive IP address.

For a new network device deployed in the network architecture, no formal IP address is allocated to the new network device. Alternatively, for a network device deployed in the network architecture, an allocated formal IP address in the network device is removed. For ease of description, the two network devices are referred to as first network devices. The first network device may request, by using another network device to which a formal IP address is already allocated in the network architecture, the upper-layer network to allocate an IP address to the first network device. The IP address allocated to the first network device is an idle IP address included in an IP address pool in the network control center. In this way, the first network device is connected to the network based on a first IP address and accesses the network by using the first IP address.

A detailed implementation process of requesting, by the first network device by using the network device to which the formal IP address is already allocated, the upper-layer network to allocate the IP address is described in detail in a subsequent embodiment, and is not described herein again.

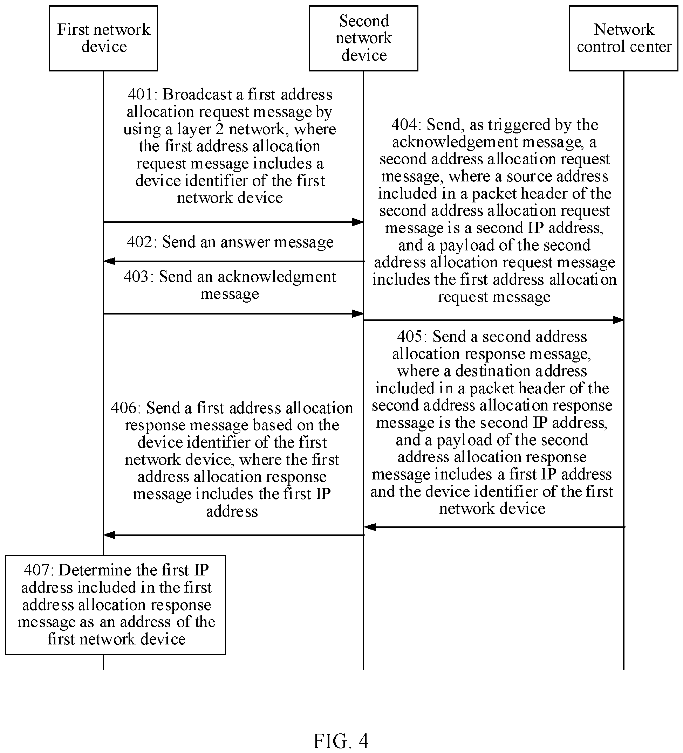

Refer to FIG. 4. An embodiment of this application provides an address obtaining method. The method is applied to any one of the foregoing network architectures in FIG. 1 to FIG. 3, and the method includes the following steps.

Step 401: A first network device broadcasts a first address allocation request message by using a layer 2 network, where the first address allocation request message includes a device identifier of the first network device.

The device identifier of the first network device may be a serial number (serial number, SN), another device number, or the like of the first network device.

The first network device may be a new network device deployed in the network architecture. In this step, when the first network device is deployed, a skilled person manually powers on the first network device to turn on the first network device. After the first network device is turned on, the first network device generates the first address allocation request message, and broadcasts the first address allocation request message by using the layer 2 network. Alternatively,
the first network device may be a device that is already deployed in the network architecture, but an allocated formal IP address in the first device is removed. In this case, the first network device may also generate the first address allocation request message, and broadcast the first address allocation request message by using the layer 2 network. For example, after the first network device is turned off, the allocated formal IP address in the first network device is removed, and after the first network device is turned on, the first network device generates the first address allocation request message, and broadcasts the first address allocation request message by using the layer 2 network.

The first network device includes a plurality of ports, and the first network device may send the first address allocation request message on each port, to broadcast the first address allocation request message.

Optionally, the first address allocation request message includes an optional field, and the optional field includes the device identifier of the first network device.

In step 401, the first address allocation request message can further include first indication information, and the first indication information indicates a network device receiving the first address allocation request message to request an upper-layer network to allocate an address to the first network device corresponding to the device identifier.

Optionally, the optional field further includes the first indication information. The optional field is located in a payload part of the first address allocation request message. The optional field includes a plurality of subfields. A first subfield may be used for including the device identifier of the first network device, and a second subfield may be used for including the first indication information. The first subfield and the second subfield are two subfields in the optional field.

When the first network device allows the network device receiving the first address allocation request message to request the upper-layer network to allocate the address to the first network device, the first address allocation request message generated by the first network device includes the first indication information.

However, the first network device may not allow the network device receiving the first address allocation request message to request the upper-layer network to allocate the address to the first network device. When the first network device does not allow the network device receiving the first address allocation request message to request the upper-layer network to allocate the address to the first network device, the first address allocation request message generated by the first network device does not include the first indication information, but may include second indication information. The second indication information indicates the network device receiving the first address allocation request message not to request the upper-layer network to allocate the address to the first network device.

For example, it is assumed that the second subfield includes one bit, the first indication information may be a bit value 1, and the second indication information may be a bit value 0. The first address allocation request message may be enabled to include the first indication information or the second indication information in the following manners: When generating the first address allocation request message, the first network device sets a value of the second subfield as the bit value 1, to be specific, the generated first address allocation request message includes the first indication information; or sets a value of the second subfield as the bit value 0, to be specific, the generated first address allocation request message includes the second indication information.

Optionally, the first address allocation request message is a DHCP request message or another message, and the another message may be a newly defined message.

In step 401, the first address allocation request message may further include third indication information, and the third indication information indicates that a type of the first address allocation request message is a message type used for requesting address allocation.

The third indication information may be a protocol type of the first address allocation request message, or may be other preset information that can indicate the protocol type.

When the third indication information is the protocol type of the first address allocation request message, a packet header of the first address allocation request message includes a protocol type field, the protocol type field carries the protocol type of the first address allocation request message, and the protocol type is a protocol type used for requesting address allocation. For example, the first address allocation request message may be the DHCP request message, a packet header of the DHCP request message includes a protocol type field, and a protocol type carried in the protocol type field is the DHCP protocol. The DHCP protocol is a protocol used for requesting address allocation. Therefore, the protocol type included in the packet header of the DHCP request message may be used as the third indication information.

When the third indication information is the preset information, all network devices located in the layer 2 network may identify a meaning of the preset information, to be specific, all the network devices may identify that a message type indicated by the preset information is the message type used for requesting address allocation. When the third indication information is the preset information, the first address allocation request message may be a newly defined message.

Optionally, when the third indication information is the preset information, the optional field of the first address allocation request message further includes the third indication information.

Optionally, the optional field of the first address allocation request message further includes a third subfield, the third subfield includes the third indication information, and the third subfield is a subfield in the optional field other than the first subfield and the second subfield.

Step 402: A second network device receives the first address allocation request message, and sends an answer message to the first network device, where the second network device is a device to which a formal IP address is already allocated.

The first network device broadcasts the first address allocation request message, and therefore other network devices located near the first network device may receive the first address allocation request message. The other network devices include network devices to which formal IP addresses are already allocated. For ease of description, the network devices to which the formal IP addresses are already allocated are referred to as second network devices. The second network device has a function of requesting the upper-layer network to allocate addresses to the other network devices. After receiving the first address allocation request message, the second network device sends the answer message to the first network device based on the device identifier that is of the first network device and that is included in the first address allocation request message, to notify the first network device of the function, so that the first network device can allow the second network device to request the upper-layer network device to allocate the address to the first network device.

Optionally, the first address allocation request message may include the first indication information or the second indication information. Therefore, the second network device may determine, based on the indication information included in the first address allocation request message, an operation continuing to be performed. During implementation,
when the first address allocation request message includes the first indication information, the second network device determines, based on the first indication information, that the second network device needs to request the upper-layer network to allocate the address to the first network device, and then sends the answer message to the first network device based on the device identifier of the first network device. During implementation,
the second network device receives the first address allocation request message, identifies the optional field included in the first address allocation request message, reads the device identifier of the first network device and the first indication information from the optional field, and parses the first indication information. When it is parsed out that the first indication information indicates that the network device receiving the first address allocation request message requests the upper-layer network to allocate the address to the first network device, the second network device sends the answer message to the first network device based on the device identifier of the first network device.

When the first address allocation request message includes the second indication information, the second network device determines, based on the second indication information, that the second network device does not need to request the upper-layer network to allocate the address to the first network device, and continues to broadcast the first address allocation request message. During implementation,
the second network device receives the first address allocation request message, identifies the optional field included in the first address allocation request message, reads the device identifier of the first network device and the second indication information from the optional field, and parses the second indication information. When it is parsed out that the second indication information indicates that the network device receiving the first address allocation request message is not allowed to request the upper-layer network to allocate the address to the first network device, the second network device broadcasts the first address allocation request message.

Optionally, before performing the foregoing operation, the second network device further parses whether the type of the first address allocation request message is the message type used for requesting address allocation, and performs the foregoing operation only when the type of the first address allocation request message is the message type used for requesting address allocation. For example, during implementation, the first address allocation request message further includes the third indication information. Therefore, when receiving the first address allocation request message, the second network device first parses, based on the third indication information, whether the type of the first address allocation request message is the message type used for requesting address allocation. If the type of the first address allocation request message is the message type used for requesting address allocation, the second network device determines, based on the first indication information or the second indication information, whether the second network device needs to request the upper-layer network to allocate the address to the first network device or send the answer message to the first network device based on the device identifier of the first network device.

It should be noted that, the formal IP address is already allocated to the second network device, and the second network device has the function of requesting the upper-layer network to allocate the address to the first network device, where the upper-layer network is a network device that is located at an upper layer of the second network device and that has an address allocation function in an IP network, for example, a BRAS, or a router or a server integrating the address allocation function. Therefore, the second network device may access, based on the IP address of the second network device, network devices having the address allocation function in the IP network. Therefore, when the second network device parses out that the type of the first address allocation request message is the message type used for requesting address allocation, the second network device sends the answer message to the first network device based on the device identifier of the first network device; or when the first address allocation request message includes the first indication information or the second indication information, the second network device determines, based on the first indication information or the second indication information, whether the second network device needs to request the upper-layer network device to allocate the address to the first network device. When the second network device needs to request the upper-layer network device to allocate the address to the first network device, the second network device sends the answer message to the first network device based on the device identifier of the first network device, to notify the first network device that the second network device has the function, so that the first network device can allow the second network device to request the upper-layer network to allocate the address to the first network device.

When the third indication information is the protocol type of the first address allocation request message, the second network device parses out the third indication information from the packet header of the first address allocation request message. When the third indication information is the protocol type used for requesting address allocation, the second network device determines that the type of the first address allocation request message is the message type used for requesting address allocation. Further, the second network device identifies the optional field from the first address allocation request message, and reads the device identifier of the first network device and/or the first indication information from the optional field, or reads the device identifier of the first network device and/or the second indication information from the optional field.

For example, assuming that the first address allocation request message is the DHCP request message, when receiving the DHCP request message, the second network device parses out that the protocol type is the DHCP protocol from the packet header of the DHCP request message, where the DHCP protocol is a protocol used for requesting address allocation. Therefore, the second network device determines that a type of the DHCP request message is the message type used for requesting address allocation, and further, the second network device identifies the optional field from the DHCP request message, and reads the device identifier of the first network device and/or the first indication information from the optional field, or reads the device identifier of the first network device and/or the second indication information.

When the third indication information is the preset information, the second network device parses out the preset information from the optional field of the first address allocation request message, and determines, based on the preset information, that the type of the first address allocation request message is the message type used for requesting address allocation, so that the second network device reads the device identifier of the first network device and/or the first indication information from the optional field, or reads the device identifier of the first network device and/or the second indication information.

The other network devices receiving the first address allocation request message send the answer message to the first network device in the same way as the second network device.

It should be noted that, for each second network device that sends the answer message to the first network device, because distances from the second network device to the first network device are different and processing performance of the second network device is different, after the second network device sends the answer message to the first network device, the first network device receives, at different moments, the answer messages sent by the different second network devices.

Step 403: The first network device receives the answer message, and sends an acknowledgment message to the second network device.

The acknowledgment message is used for triggering the second network device to request the upper-layer network to allocate the address to the first network device.

In step 403, the first network device receives answer messages sent by different second network devices at different moments, selects an answer message from the received answer messages, and sends the acknowledgment message to the second network device for the second network device that sends the selected answer message. In this way, it can be ensured that only one second network device requests the upper-layer network to allocate the address to the first network device. Therefore, a conflict problem caused because the different second network devices request the upper-layer network to allocate the address to the first network device is avoided.

The operation of selecting the answer message by the first network device may be: The first network device selects the first received answer message, selects the last received answer message, or randomly selects a received answer message.

Step 404: The second network device receives the acknowledgment message, and sends, as triggered by the acknowledgment message, a second address allocation request message to the upper-layer network, where a source address included in a packet header of the second address allocation request message is a second IP address, a payload of the second address allocation request message includes the first address allocation request message, and the second IP address is an IP address already allocated to the second network device.

In step 404, after receiving the acknowledgment message, the second network device determines that the first network device allows the first network device to request the upper-layer network to allocate the address to the first network device. Therefore, the second network device generates, as triggered by the acknowledgment message, the second address allocation request message, and sends the second address allocation request message to the upper-layer network.

Optionally, when receiving the first address allocation request message, the second network device may not send the answer message to the first network device. In other words, after receiving the first address allocation request message, the second network device sends the second address allocation request message to the upper-layer network. In this way, the operation of sending the answer message in step 402 and the operation in step 403 may not be performed. In this way, there may be one or more network devices sending the second address allocation request message to the upper-layer network, but the upper-layer network has a mechanism for resolving a conflict problem, to ensure that the IP address is allocated to the first network device only after the second address allocation request message of one of the network devices is received. A detailed implementation process of the mechanism is described in subsequent content, and is not described in detail herein.

Optionally, after receiving the acknowledgment message, the second network device further binds the device identifier of the first network device and a first port, where the first port is a port that is in the second network device and that is used for receiving the first address allocation request message. The following provides an example of binding. The example is: The second network device stores a correspondence between the device identifier of the first network device and a port number of the first port. In this way, when requesting the upper-layer network to allocate addresses to different first network devices, the second network device may accurately send an address of each first network device to each first network device based on the correspondence.

Optionally, the second network device may further include a third IP address, the third IP address is an address of the network control center, and a destination address included in the packet header of the second address allocation request message is the third IP address. In this way, it is ensured that the second address allocation request message can be sent to the network control center.

When the second network device includes the third IP address, the second network device establishes a network connection to the network control center based on the second IP address and the third IP address, and sends the second address allocation request message to the network control center by using the network connection.

Optionally, the second network device may alternatively not include the third IP address. In other words, the destination address included in the packet header of the second address allocation request message sent by the second network device is empty. After the second network device sends the second address allocation request message, for another network device including the third IP address, when receiving the second address allocation request message, the another network device sets the destination address included in the packet header of the second address allocation request message as the third IP address, and then sends the second address allocation request message to the network control center.

Step 405: The network control center receives the second address allocation request message, and sends a second address allocation response message to the second network device, where a destination address included in a packet header of the second address allocation response message is the second IP address, a payload of the second address allocation response message includes a first IP address and the device identifier of the first network device, and the first IP address is an address allocated by the network control center to the first network device.

The network control center includes at least one address pool, and each address pool includes at least one consecutive address. In step 405, the network control center receives the second address allocation request message, selects one address pool from the at least one address pool, selects an idle address from the address pool as the first IP address allocated to the first network device corresponding to the device identifier, and sends the second address allocation response message to the second network device, where the second address allocation response message includes the first IP address and the device identifier of the first network device.

The operation of selecting the address pool by the network control center may be: The network control center may select, from the at least one address pool, an address pool with a largest quantity of idle addresses, an address pool with a smallest quantity of idle addresses, or randomly selects an address pool.

When the operation of sending the answer message in step 402 and the operation in step 403 are not performed, the network control center may receive second address allocation request message/second address allocation request messages sent by one or more network devices. After receiving one second address allocation request message, the network control center determines whether an IP address is already allocated to the first network device corresponding to the device identifier included in the second address allocation request message. If no IP address is allocated, the network control center allocates the first IP address to the first network device, and sends the second address allocation response message including the device identifier and the first IP address. If the IP address is already allocated, the received second address allocation request message is discarded, to avoid repeatedly allocating the IP address to the first network device, that is, a conflict problem is avoided.

The network control center includes a device identifier set, and the device identifier set includes device identifiers of network devices to which addresses are already allocated. Therefore, after receiving the second address allocation request message including the device identifier of the first network device, the network control center detects whether the device identifier set includes the device identifier of the first network device. If the device identifier of the first network device is included, the network control center determines that the IP address is already allocated to the first network device; or if the device identifier of the first network device is not included, the network control center determines that no IP address is already allocated to the first network device.

The network control center may be a controller or an address server.

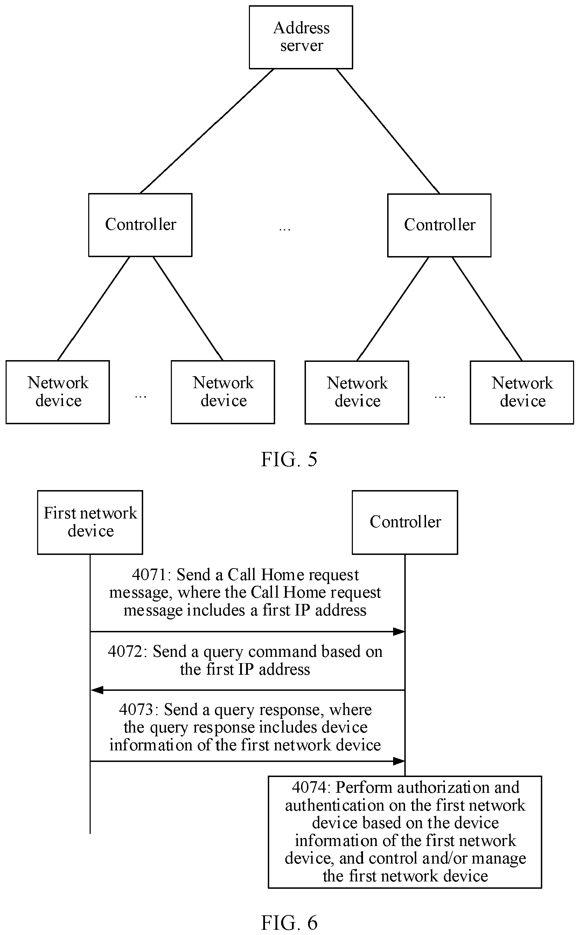

When the network control center is a controller, an address pool in the controller may be obtained in advance by the controller. Refer to FIG. 5. The controller may communicate with an address server (to be specific, the controller may have a network connection to the address server), and the address server includes one or more address pools. The controller may obtain in advance at least one address pool from the address server, and store the obtained at least one address pool.

Refer to FIG. 5. The address server may be located in a cloud, and controllers in different network architectures may obtain at least one address pool from the address server. In this way, one address server may be disposed in a centralized manner, so that there is no need to separately dispose address servers in different network architectures. Therefore, costs are reduced.

Optionally, the address server may be a DHCP server.

For the second address allocation response message, a source address included in the packet header of the second address allocation response message is the third IP address.

Optionally, the payload of the second address allocation response message includes the optional field, and the optional field includes the first IP address and the device identifier of the first network device.

Optionally, the optional field includes a fourth subfield and a fifth subfield, the fourth subfield includes the first IP address, and the fifth subfield includes the device identifier of the first network device.

Optionally, the second address allocation response message may further include an IP address of the controller. For example, the optional field further includes a sixth subfield, and the sixth subfield includes the IP address of the controller.

Optionally, the second address allocation response message is a DHCP response message.

Step 406: The second network device receives the second address allocation response message, and sends a first address allocation response message to the first network device based on the device identifier of the first network device, where the first address allocation response message includes the first IP address.

In step 406, the second network device receives the second address allocation response message, where the payload of the second address allocation response message includes the first IP address and the device identifier of the first network device; determines a first port bound to the device identifier; and sends the first address allocation response message to the first network device through the first port.

The operation of determining the first port bound to the device identifier may be: obtaining, based on the device identifier, a corresponding port number from a correspondence between the device identifier and the port number, and determining that a port corresponding to the port number is the first port bound to the device identifier.

Optionally, when the second address allocation response message further includes the IP address of the controller, the first address allocation response message further includes the IP address of the controller.

Step 407: The first network device receives the first address allocation response message, and determines the first IP address included in the first address allocation response message as an address of the first network device.

Optionally, when the first address allocation response message further includes the IP address of the controller, the first network device establishes a network connection to the controller based on the first IP address and the IP address of the controller.

After the first network device establishes the network connection to the controller, the controller may control and/or manage the first network device by using the network connection.

Refer to FIG. 6. In step 407, the network connection to the controller may be established by using the following operations 4071 to 4074. The operations of 4071 to 4074 are respectively:
4071: The first network device sends a call home (Call Home) request message to the controller based on the IP address of the controller, where the Call Home request message includes the first IP address.
4072: The controller receives the Call Home request message, and sends a query command to the first network device based on the first IP address included in the Call Home request message.
4073: The first network device receives the query command, and sends a query response to the controller, where the query response includes device information of the first network device.

The device information of the first network device includes one or more of authorization information, authentication information, and the like.

4074: The controller receives the query response, performs authorization and authentication on the first network device based on the device information that is of the first network device and that is included in the query response, and controls and/or manages the first network device after the authorization and authentication succeed.

The first network device may be an OLT, and the second network device may also be an OLT; or the first network device may be an ONT, and the second network device is an OLT; or the first network device may be an MXU, and the second network device is an OLT; or the first network device may be a Leaf, and the second network device is a Spine.

In this embodiment of this application, for the first network device to which the IP address needs to be allocated, after being powered on and turned on, the first network device broadcasts the first address allocation request message, and the second network device located near the first network device may receive the first address allocation request message. Because the formal IP address (the second IP address) is already allocated to the second network device, the second network device may normally be connected to a network based on the second IP address and can access the network. Therefore, the second network device may act as a proxy for the first network device to request the upper-layer network to allocate the address to the first network device, to be specific, the second network device may send the second address allocation request message to the upper-layer network. The source address of the second address allocation request message is the second IP address, and the payload includes the first address allocation request message. Therefore, after receiving the second address allocation request message, the network control center may send the second address allocation response message to the second network device based on the second IP address, where the second address allocation response message includes the first IP address allocated to the first network device. The second network device sends the first address allocation response message including the first IP address to the first network device, so that the first network device can obtain the first IP address, to be specific, obtain the IP address allocated by the upper-layer network to the first network device. The second network device may act as the proxy for the first network device to request the upper-layer network to allocate the address to the first network device. In this way, an IP address of a DHCP server does not need to be set in advance in the first network device, and the first network device does not need to establish a separate channel to the DHCP server. Therefore, efficiency of obtaining the IP address is improved. In addition, there may be no need to separately set a DHCP server in the network architecture. Therefore, costs are reduced. Alternatively, it is ensured that the first network device can obtain the IP address of the first network device even if there is no DHCP server in the network architecture. The first network device does not rely on the DHCP server, enhancing reliability and simplifying the network architecture.

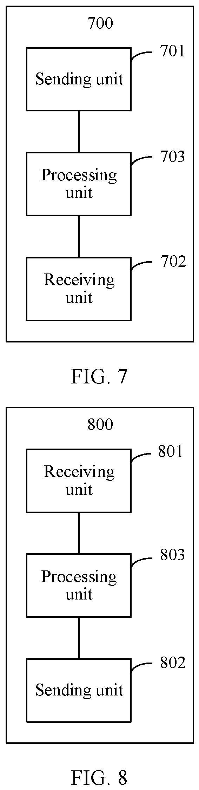

Refer to FIG. 7. An embodiment of this application provides an address obtaining apparatus 700. The apparatus 700 may be deployed in the first network device provided in any one of the foregoing embodiments. The apparatus includes:
a sending unit 701, configured to broadcast a first address allocation request message by using a layer 2 network, where the first address allocation request message includes a device identifier of the apparatus 700 and indication information, the indication information indicates a network device receiving the first address allocation request message to request an upper-layer network to allocate an address to the apparatus 900 corresponding to the device identifier, and a network device capable of receiving the first address allocation request message includes a second network device; and
a receiving unit 702, configured to receive a first address allocation response message sent by the second network device, where the first address allocation response message includes a first Internet Protocol IP address, and the first IP address is an IP address that is allocated to the apparatus 700 and that is received by the second network device from the upper-layer network.

Optionally, for a detailed implementation process of broadcasting the first address allocation request message by the sending unit 701, refer to related content in step 401 in the embodiment shown in FIG. 4. Details are not described herein again.

Optionally, for a detailed implementation process of receiving the first address allocation response message by the receiving unit 702, refer to related content in step 407 in the embodiment shown in FIG. 4. Details are not described herein again.

Optionally, the apparatus 700 further includes a processing unit 703, where
the receiving unit 702 is further configured to receive an answer message sent by at least one second network device;
the processing unit 703 is configured to select a second network device based on the received answer message; and
the sending unit 701 is further configured to send an acknowledgment message to the selected second network device, where the acknowledgment message is used for triggering the selected second network device to request the upper-layer network to allocate the address to the apparatus corresponding to the device identifier.

Optionally, for a detailed implementation process of selecting the answer message by the processing unit 703, refer to related content in step 403 in the embodiment shown in FIG. 4. Details are not described herein again.

Optionally, the first address allocation request message includes an optional field, and the optional field includes the device identifier and the indication information.

In this embodiment of this application, the first address allocation request message sent by the sending unit includes the device identifier of the apparatus and the indication information, and the indication information indicates the network device receiving the first address allocation request message to request the upper-layer network to allocate the address to the apparatus corresponding to the device identifier. Therefore, for the second network device receiving the first address allocation request message, the second network device may act as a proxy for the apparatus to request the upper-layer network to allocate the IP address to the apparatus. In this way, an IP address of a DHCP server does not need to be set in advance in the apparatus, and the apparatus does not need to establish a separate channel to the DHCP server. Therefore, efficiency of obtaining the IP address is improved. In addition, the apparatus may do not need to rely on a DHCP server, in a network architecture in which the first network device is located, to allocate the address, so that the DHCP server may be omitted in the network architecture. Therefore, costs are reduced and it is ensured that the IP address can be successfully allocated to the apparatus.

Refer to FIG. 8. An embodiment of this application provides an address obtaining apparatus 800. The apparatus 800 may be deployed in the second network device provided in any one of the foregoing embodiments. The apparatus includes:
a receiving unit 801, configured to receive a first address allocation request message sent by a first network device, where the first address allocation request message includes a device identifier of the first network device, and the first address allocation request message requests to allocate an Internet Protocol IP address to the first network device; and
a sending unit 802, configured to send a second address allocation request message to an upper-layer network, where a source address included in a packet header of the second address allocation request message is a second IP address, a payload of the second address allocation request message includes the first address allocation request message, and the second IP address is an address already allocated to the apparatus 800, where
the receiving unit 801 is further configured to receive a second address allocation response message, where a destination address included in a packet header of the second address allocation response message is the second IP address, a payload of the second address allocation response message includes a first IP address and the device identifier, and the first IP address is an address allocated by the upper-layer network to the first network device; and
the sending unit 802 is further configured to send a first address allocation response message to the first network device based on the device identifier, where the first address allocation response message includes the first IP address.

Optionally, for a detailed implementation process of sending the second address allocation request message by the sending unit 802, refer to related content in step 404 in the embodiment shown in FIG. 4. Details are not described herein again.

Optionally, for a detailed implementation process of receiving the second address allocation response message by the receiving unit 801, refer to related content in step 406 in the embodiment shown in FIG. 4. Details are not described herein again.

Optionally, the first address allocation request message further includes indication information. The indication information indicates a network device receiving the first address allocation request message to request the upper-layer network to allocate an address to the first network device corresponding to the device identifier, and a network device capable of receiving the first address allocation request message includes the apparatus 800.

The sending unit 802 is configured to
send the second address allocation request message to the upper-layer network based on an indication of the indication information.

Optionally, the sending unit 802 is configured to send an answer message to the first network device based on the indication of the indication information;
the receiving unit 801 is configured to receive an acknowledgment message sent by the first network device based on the answer message; and
the sending unit 802 is further configured to send, as triggered by the acknowledgment message, the second address allocation request message to the upper-layer network.

Optionally, the apparatus 800 further includes:
a processing unit 803, configured to bind the device identifier and a first port, where the first port is a port that is in the apparatus 800 and that is used for receiving the first address allocation request message.

Optionally, for a detailed implementation process of binding the device identifier and the first port by the processing unit 803, refer to related content in step 404 in the embodiment shown in FIG. 4. Details are not described herein again.

Optionally, the processing unit 803 is configured to determine the first port bound to the device identifier; and
the sending unit 802 is configured to send the first address allocation response message to the first network device through the first port.

Optionally, the first address allocation request message includes an optional field, and the optional field includes the device identifier.

In this embodiment of this application, the source address included in the packet header of the second address allocation request message is the second IP address, the payload of the second address allocation request message includes the first address allocation request message, and the second IP address is the address already allocated to the apparatus. In this way, the second address allocation request message sent by the sending unit can be successfully transmitted to the upper-layer network, so that the upper-layer network can receive the second address allocation request message and allocate the first IP address to the first network device. In addition, the destination address of the second address allocation response message is the second IP address. In this way, it is ensured that the second address allocation response message can be successfully transmitted from the upper-layer network to the apparatus. To be specific, the receiving unit can successfully receive the first IP address, and then the sending unit sends the first IP address to the first network device. In this way, an IP address of a DHCP server does not need to be set in advance in the first network device, and the first network device does not need to establish a separate channel to the DHCP server. Therefore, efficiency of obtaining the IP address is improved. In addition, the first network device does not need to rely on a DHCP server, in a network architecture in which the first network device is located, to allocate the address, so that the DHCP server may be omitted in the network architecture. Therefore, costs are reduced and it is ensured that the IP address can be successfully allocated to the first network device.

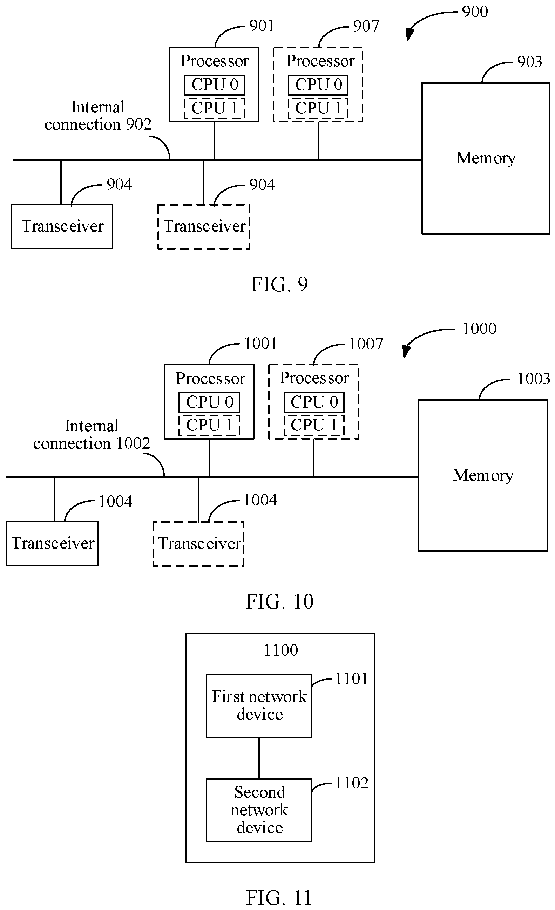

Refer to FIG. 9. An embodiment of this application provides a schematic diagram of an address obtaining apparatus 900. The apparatus 900 may be the first network device in any one of the foregoing embodiments. The apparatus 900 includes at least one processor 901, an internal connection 902, a memory 903, and at least one transceiver 904.

The apparatus 900 is an apparatus of a hardware structure, and may be configured to implement function modules in the apparatus 700 shown in FIG. 7. For example, a person skilled in the art may figure out that the processing unit 703 in the apparatus 700 shown in FIG. 7 may be implemented by the at least one processor 901 by invoking code in the memory 903, and the sending unit 701 and the receiving unit 702 in the apparatus 700 shown in FIG. 7 may be implemented by the transceiver 904.

Optionally, the apparatus 900 may be further configured to implement a function of the first network device in any one of the foregoing embodiments.

Optionally, the processor 901 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 902 may include a path for transmitting information between the foregoing components. Optionally, the internal connection 902 is a board, a bus, or the like.

The transceiver 904 is configured to communicate with another device or a communication network.

The memory 903 may be a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), and a disk storage medium or another disk storage device, or any other medium that can be used for carrying or storing expected program code in a form of instructions or a data structure and that can be accessed by a computer. However, the memory 903 is not limited herein. The memory may exist independently, and is connected to the processor through the bus. The memory may alternatively be integrated with the processor.

The memory 903 is configured to store application program code for performing the solutions of this application, and the application program code is executed under control of the processor 901. The processor 901 is configured to execute the application program code stored in the memory 903, and cooperate with the at least one transceiver 904, so that the apparatus 900 implements functions in the method in this patent.

During specific implementation, in an embodiment, the processor 901 may include one or more CPUs, for example, a CPU 0 and a CPU 1 in FIG. 9.

During specific implementation, in an embodiment, the apparatus 900 may include a plurality of processors, for example, the processor 901 and a processor 907 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 10. An embodiment of this application provides a schematic diagram of an address obtaining apparatus 1000. The apparatus 1000 may be the second network device in any one of the foregoing embodiments. The apparatus 1000 includes at least one processor 1001, an internal connection 1002, a memory 1003, and at least one transceiver 1004.

The apparatus 1000 is an apparatus of a hardware structure, and may be configured to implement function modules in the apparatus 800 shown in FIG. 8. For example, a person skilled in the art may figure out that the processing unit 803 in the apparatus 800 shown in FIG. 8 may be implemented by the at least one processor 1001 by invoking code in the memory 1003, and the receiving unit 801 and the sending unit 802 in the apparatus 800 shown in FIG. 8 may be implemented by the transceiver 1004.

Optionally, the apparatus 1000 may be further configured to implement a function of the second network device in any one of the foregoing embodiments.

Optionally, the processor 1001 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 1002 may include a path for transmitting information between the foregoing components. Optionally, the internal connection 1002 is a board, a bus, or the like.

The transceiver 1004 is configured to communicate with another device or a communication network.

The memory 1003 may be a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), and a disk storage medium or another disk storage device, or any other medium that can be used for carrying or storing expected program code in a form of instructions or a data structure and that can be accessed by a computer. However, the memory 1003 is not limited herein. The memory may exist independently, and is connected to the processor through the bus. The memory may alternatively be integrated with the processor.

The memory 1003 is configured to store application program code for performing the solutions of this application, and the processor 1001 controls the execution. The processor 1001 is configured to execute the application program code stored in the memory 1003, and cooperate with the at least one transceiver 1004, so that the apparatus 1000 implements functions in the method in this patent.

During specific implementation, in an embodiment, the processor 1001 may include one or more CPUs, for example, a CPU 0 and a CPU 1 in FIG. 10.

During specific implementation, in an embodiment, the apparatus 1000 may include a plurality of processors, for example, the processor 1001 and a processor 1007 shown in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 11. An embodiment of this application provides an address obtaining system 1100. The system 1100 includes the apparatus 700 shown in FIG. 7 and the apparatus 800 shown in FIG. 8, or includes the apparatus 900 shown in FIG. 9 and the apparatus 1000 shown in FIG. 10.

The apparatus 700 shown in FIG. 7 and the apparatus 900 shown in FIG. 9 may be a first network device 1101, and the apparatus 800 shown in FIG. 8 and the apparatus 1000 shown in FIG. 10 may be a second network device 1102.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. An address obtaining method, wherein the method comprises:
broadcasting, by a first network device, a first address allocation request message by using a layer 2 network, wherein the first address allocation request message comprises a device identifier of the first network device and indication information, the indication information indicates a network device receiving the first address allocation request message to request an upper-layer network to allocate an address to the first network device corresponding to the device identifier, and a network device capable of receiving the first address allocation request message comprises a second network device; and
receiving, by the first network device, a first address allocation response message sent by the second network device, wherein the first address allocation response message comprises a first Internet Protocol IP address, and the first IP address is an IP address that is allocated to the first network device and that is received by the second network device from the upper-layer network.

2. The method according to claim 1, wherein the second network device is a device to which a formal IP address is already allocated; and the method further comprises: after receiving the first address allocation request message, requesting, by the second network device, the upper-layer network to allocate the address to the first network device corresponding to the device identifier.

3. The method according to claim 1 or 2, wherein the method further comprises:
receiving, by the first network device, an answer message sent by at least one second network device;
selecting, by the first network device, a second network device based on the received answer message; and
sending, by the first network device, an acknowledgment message to the selected second network device, wherein the acknowledgment message is used for triggering the selected second network device to request the upper-layer network to allocate the address to the first network device corresponding to the device identifier.

4. The method according to any one of claims 1 to 3, wherein the first address allocation request message comprises an optional field, and the optional field comprises the device identifier and the indication information.

5. An address obtaining method, wherein the method comprises:
receiving, by a second network device, a first address allocation request message sent by a first network device, wherein the first address allocation request message comprises a device identifier of the first network device, and the first address allocation request message requests to allocate an Internet Protocol IP address to the first network device;
sending, by the second network device, a second address allocation request message to an upper-layer network, wherein a source address comprised in a packet header of the second address allocation request message is a second IP address, a payload of the second address allocation request message comprises the first address allocation request message, and the second IP address is an address already allocated to the second network device;
receiving, by the second network device, a second address allocation response message, wherein a destination address comprised in a packet header of the second address allocation response message is the second IP address, a payload of the second address allocation response message comprises a first IP address and the device identifier, and the first IP address is an address allocated by the upper-layer network to the first network device; and
sending, by the second network device, a first address allocation response message to the first network device based on the device identifier, wherein the first address allocation response message comprises the first IP address.

6. The method according to claim 5, wherein the first address allocation request message further comprises indication information, the indication information indicates a network device receiving the first address allocation request message to request the upper-layer network to allocate an address to the first network device corresponding to the device identifier, and a network device capable of receiving the first address allocation request message comprises the second network device; and
the sending, by the second network device, a second address allocation request message to an upper-layer network comprises:
sending, by the second network device, the second address allocation request message to the upper-layer network based on an indication of the indication information.

7. The method according to claim 6, wherein the sending, by the second network device, the second address allocation request message to the upper-layer network based on an indication of the indication information comprises:
sending, by the second network device, an answer message to the first network device based on the indication of the indication information;
receiving, by the second network device, an acknowledgment message sent by the first network device based on the answer message; and
sending, by the second network device as triggered by the acknowledgment message, the second address allocation request message to the upper-layer network.

8. The method according to any one of claims 5 to 7, wherein after the receiving, by a second network device, a first address allocation request message sent by a first network device, the method further comprises:
binding, by the second network device, the device identifier and a first port, wherein the first port is a port that is in the second network device and that is used for receiving the first address allocation request message.

9. The method according to claim 8, wherein the sending, by the second network device, a first address allocation response message to the first network device based on the device identifier comprises:
determining, by the second network device, the first port bound to the device identifier, and sending the first address allocation response message to the first network device through the first port.

10. The method according to any one of claims 5 to 9, wherein the first address allocation request message comprises an optional field, and the optional field comprises the device identifier.

11. An address obtaining apparatus, wherein the apparatus comprises:
a sending unit, configured to broadcast a first address allocation request message by using a layer 2 network, wherein the first address allocation request message comprises a device identifier of the apparatus and indication information, the indication information indicates a network device receiving the first address allocation request message to request an upper-layer network to allocate an address to the apparatus corresponding to the device identifier, and a network device capable of receiving the first address allocation request message comprises a second network device; and
a receiving unit, configured to receive a first address allocation response message sent by the second network device, wherein the first address allocation response message comprises a first Internet Protocol IP address, and the first IP address is an IP address that is allocated to the apparatus and that is received by the second network device from the upper-layer network.

12. The apparatus according to claim 11, wherein the apparatus further comprises a processing unit, wherein
the receiving unit is further configured to receive an answer message sent by at least one second network device;
the processing unit is configured to select a second network device based on the received answer message; and
the sending unit is further configured to send an acknowledgment message to the selected second network device, wherein the acknowledgment message is used for triggering the selected second network device to request the upper-layer network to allocate the address to the apparatus corresponding to the device identifier.

13. The apparatus according to claim 11 or 12, wherein the first address allocation request message comprises an optional field, and the optional field comprises the device identifier and the indication information.

14. An address obtaining apparatus, wherein the apparatus comprises:
a receiving unit, configured to receive a first address allocation request message sent by a first network device, wherein the first address allocation request message comprises a device identifier of the first network device, and the first address allocation request message requests to allocate an Internet Protocol IP address to the first network device; and
a sending unit, configured to send a second address allocation request message to an upper-layer network, wherein a source address comprised in a packet header of the second address allocation request message is a second IP address, a payload of the second address allocation request message comprises the first address allocation request message, and the second IP address is an address already allocated to the apparatus, wherein
the receiving unit is further configured to receive a second address allocation response message, wherein a destination address comprised in a packet header of the second address allocation response message is the second IP address, a payload of the second address allocation response message comprises a first IP address and the device identifier, and the first IP address is an address allocated by the upper-layer network to the first network device; and
the sending unit is further configured to send a first address allocation response message to the first network device based on the device identifier, wherein the first address allocation response message comprises the first IP address.

15. The apparatus according to claim 14, wherein the first address allocation request message further comprises indication information, the indication information indicates a network device receiving the first address allocation request message to request the upper-layer network to allocate an address to the first network device corresponding to the device identifier, and a network device capable of receiving the first address allocation request message comprises the apparatus; and
the sending unit is configured to:
send the second address allocation request message to the upper-layer network based on an indication of the indication information.

16. The apparatus according to claim 15, wherein
the sending unit is configured to send an answer message to the first network device based on the indication of the indication information;
the receiving unit is configured to receive an acknowledgment message sent by the first network device based on the answer message; and
the sending unit is further configured to send, as triggered by the acknowledgment message, the second address allocation request message to the upper-layer network.

17. The apparatus according to any one of claims 14 to 16, wherein the apparatus further comprises:
a processing unit, configured to bind the device identifier and a first port, wherein the first port is a port that is in the apparatus and that is used for receiving the first address allocation request message.

18. The apparatus according to claim 17, wherein
the processing unit is further configured to determine the first port bound to the device identifier; and
the sending unit is configured to send the first address allocation response message to the first network device through the first port.

19. The apparatus according to any one of claims 14 to 18, wherein the first address allocation request message comprises an optional field, and the optional field comprises the device identifier.

20. An address obtaining system, wherein the system comprises the apparatus according to any one of claims 11 to 13 and the apparatus according to any one of claims 14 to 19.
